# EUROPEAN PATENT APPLICATION

(11) **EP 0 934 805 A2**
(43) Date of publication of application: **11.08.1999**
(21) Application number: 99300855.6
(22) Date of filing: 05.02.1999
(51) Int. Cl.: B25J 19/00

(54) **Sealed structure of outer wall for industrial robot**

(30) Priority: 06.02.1998 JP 3980598
(71) Applicant: FANUC LTD, Minamitsuru-gun, Yamanashi 401-0597 (JP)
(72) Inventor: Kinoshita, Satoshi, 9-306, Fanuc Manshonharimomi, Minamitsuru-gun, Yamanashi 401-0511 (JP); Ibayashi, Jun, Fanuc Dai3virakaramatsu, Minamitsuru-gun, Yamanashi 401-0511 (JP)
(74) Representative: Billington, Lawrence Emlyn

(57) **Abstract**

Vessel-shaped internal pressure fluctuation absorbing means 19 having a variable capacity is connected to an outer wall 8. As the internal pressure fluctuation absorbing means 19 expands or contracts, fluctuation in pressure that is caused as the substantial volume of the space inside the outer wall 8 is changed by the movement of a linear axis J1 is absorbed, whereby the pressure of a gas inside the outer wall 8 is prevented from lowering, so that penetration of dust or water can be avoided. The same object is achieved by connecting the outer wall 8 with a gas inlet member 20 for feeding a compressed gas into the space inside the outer wall 8 and an exhaust mechanism 21 adapted to evacuate the gas when the internal pressure exceeds a set value.

## Description

The present invention relates to a sealed structure of an outer wall for an industrial robot covered by the outer wall so that a substantially sealed space is defined inside.

An industrial robot, especially a robot that is used in a food processing plant or the like, requires a mechanism for preventing penetration of water lest water get into the robot and exert a bad influence upon the performance of the robot. Since the robot is provided with elements that can be disabled when touched by water or dust, moreover, these elements should be covered and cut off from the outside. To attain this, an outer wall is used to cover the whole robot to define a sealed space inside, thereby fulfilling water- and dustproof functions.

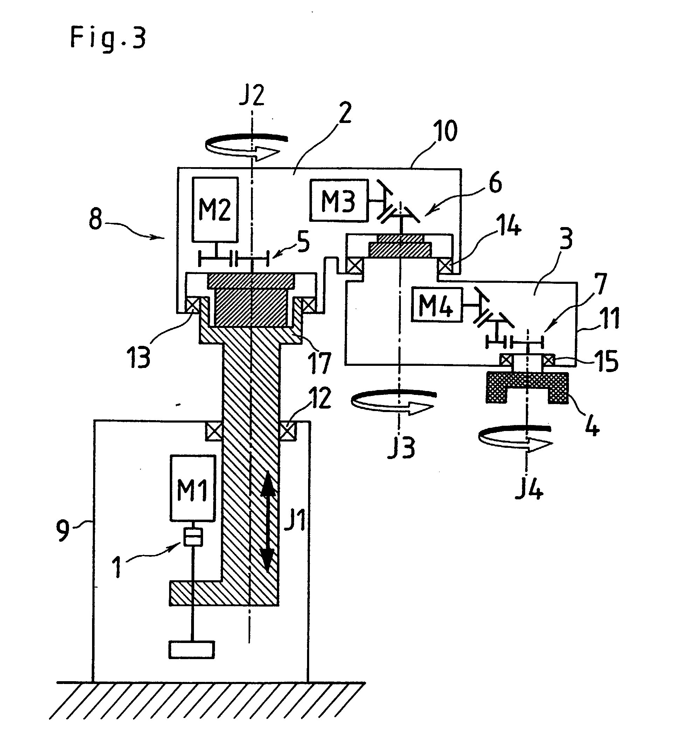

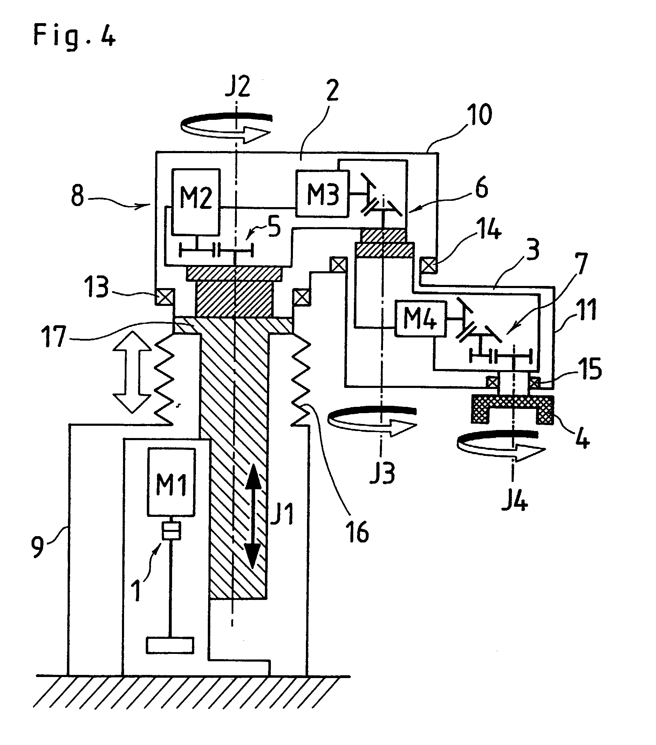

FIGS. 3 and 4 individually show two examples of the industrial robot (hereinafter referred to simply as robot) of this type.

First, a robot having water- and dustproof functions shown in FIG. 3 will be described.

The robot has one linear axis J1 and three rotation axes J2, J3 and J4. The linear axis J1 is driven for translation by a servomotor M1 with the aid of a ball screw and nut mechanism 1 or the like, and serves to move a second axis arm 2 up and down. The rotation axis J2 causes a servomotor M2 to rotate the second axis arm 2 within a horizontal plane through the medium of a speed reducer 5. The rotation axis J3 causes a servomotor M3 to rotate a third axis arm 3 within a horizontal plane through the medium of a speed reducer 6. The rotation axis J4 causes a servomotor M4 to rotate a working tool 4 within a horizontal plane through the medium of a speed reducer 7.

An outer wall 8 that covers the robot is composed of a first casing 9 stored with the ball screw and nut mechanism 1, servomotor M1, etc., a second casing 10 stored with the servomotors M2 and M3, speed reducers 5 and 6, etc., and a third casing 11 stored with the servomotor M4, speed reducer 7, etc.

An oil seal 12 for maintaining dust- and waterproof functions is mounted between the first casing 9 and the linear axis J1 that makes a straight advance with respect to the first casing 9.

Oil seals 13, 14 and 15 for dust- and waterproof functions are mounted between the second casing 10 and the linear axis J1 that rotates with respect to the second casing 10, between the second casing 10 and the third casing 11 that rotate with respect to the second casing 10, and between the third casing 11 and the rotation axis J4 that rotates with respect to the third casing 11, respectively.

When the linear axis J1 of the robot of FIG. 3 descends, the substantial volume of the space inside the first casing 9 decreases, so that the pressure inside the first casing 9 rises. When the linear axis J1 ascends, in contrast with this, the substantial volume of the space inside the first casing 9 increases, so that the pressure in the first casing 9 lowers.

If the oil seal 12 that is mounted between the first casing 9 and the linear axis J1 is damaged, the outside air gets into the first casing 9 through the damaged portion of the oil seal 12 when the linear axis J1 ascends to lower the pressure in the first casing 9. In consequence, dust or moisture in the outside air exerts a bad influence upon the ball screw and nut mechanism 1, servomotor M1, etc. in the first casing 9. Since the pressure inside the first casing 9 fluctuates frequently as the linear axis J1 moves up and down, the first casing 9 itself repeats elastic deformation, possibly undergoing metallic fatigue.

In the robot shown in FIG. 3, moreover, the second casing 10 and the third casing 11 are independent of each other and of the first casing 9. The respective internal pressures of the second and third casings 10 and 11 never fluctuate as the second and third axis arms 2 and 3 rotate. If any one of the oil seals 13, 14 and 15 between the linear axis J1 and the second casing 10, between the second and third casings 10 and 11, and between the third casing 11 and the rotation axis J4 is damaged, the outside air containing dust and moisture inevitably gets into the second or third casing.

If the robot is cooled directly after the operation of the robot is stopped when the air warmed during the operation goes out through the oil seals 13, 14 and 15 and the like, in particular, there is a high possibility of the outside air being introduced through the damaged portion of the oil seal 13, 14 or 15 so that dust or moisture gets into any of the casings 9, 10 and 11, since the pressures in the casings relatively lower as the temperature drops.

Then, a robot having water- and dustproof functions shown in FIG. 4 will be described.

Since this robot has basically the same construction as the robot shown in FIG. 3, only differences between them will be described. In FIG. 4, those elements which are denoted by the same reference numerals used in FIG. 3 are identical with their corresponding elements of the robot shown in FIG. 3.

In the robot shown in FIG. 4, a cylindrical flexible bellows 16 coaxial with a linear axis J1 is mounted between the top surface of a first casing 9 and the undersurface of a top flange portion 17 of the linear axis J1. In the robot shown in FIG. 4, therefore, an oil seal 12, such as the one shown in FIG. 3, is not mounted between the first casing 9 and the linear axis J1.

When the linear axis J1 of the robot of FIG. 4 descends, the bellows is contracted to reduce the substantial volume of the space inside the first casing 9, so that the pressure in the first casing 9 rises. When the linear axis J1 ascends, in contrast with this, the bellows is expanded to increase the substantial volume of the space inside the first casing 9, so that the pressure in the first casing 9 lowers.

Accordingly, the robot of FIG. 4 resembles the robot of FIG. 3 in that the pressure in the first casing 9 is caused to fluctuate by the motion of the linear axis J1 of the robot, so that it is encountered by the same problems mentioned before in connection with the robot of FIG. 3. In the robot of FIG. 4, moreover, the bellows 16 itself is caused repeatedly to expand and contract by the pressure fluctuation in the first casing 9 that is caused by the motion of the linear axis J1, so that it may possibly crack due to degradation of its material.

Since the second and third casings 10 and 11 of the robot of FIG.4 are constructed in the same manner as those of the robot of FIG.3, possible problems on the second and third casings 10 and 11 of the robot of FIG.3 can be equally aroused by the robot of FIG.4.

The object of the present invention is to provide an outer wall structure of an industrial robot, in which fluctuation of the pressure inside an outer wall can be prevented or reduced so that penetration of dust or water can be prevented or reduced more securely. Preferably the outer wall and necessary members for sealing the same can be protected from deterioration under pressure load.

A first aspect of a sealed structure of an industrial robot according to the present invention is arranged so that, in an industrial robot having a sealed outer wall, the outer wall is connected with vessel-shaped internal pressure fluctuation absorbing means having a variable capacity.

A second aspect of a sealed structure of an industrial robot according to the present invention is arranged so that, in an industrial robot having a sealed outer wall, the outer wall is connected with a gas inlet port through which a compressed gas is fed into the space inside the outer wall and an exhaust mechanism adapted to evacuate or reduce the gas in the space inside the outer wall when the pressure inside the outer wall becomes higher than a set value.

Further aspects of the present invention are set out in attached independent claims 6 and 8.

According to the present invention, penetration of dust or water, attributable to the reduction of the gas pressure inside the outer wall what covers the robot, can be prevented or reduced, and the outer wall and necessary members for sealing it are subjected to a a zero or reduced load attributable to the difference between internal and external pressures, so that the outer wall structure and sealed structure are improved in durability.

### BRIEF DESCRIPTION OF THE DRAWINGS

FIG. 1 is a block diagram showing a sealed structure of an industrial robot according to a first embodiment of the present invention;
FIG. 2 is a block diagram showing a sealed structure of an industrial robot according to a second embodiment of the present invention;
FIG. 3 is a block diagram showing an example of a sealed structure of a conventional industrial robot;
FIG. 4 is a block diagram showing another example of the sealed structure of the conventional industrial robot; and
FIG. 5A and 58 are views for briefly explaining the operation of the exhaust mechanism provided on the outer wall of the industrial robot of FIG. 1.

### BEST MODE FOR CARRYING OUT THE INVENTION

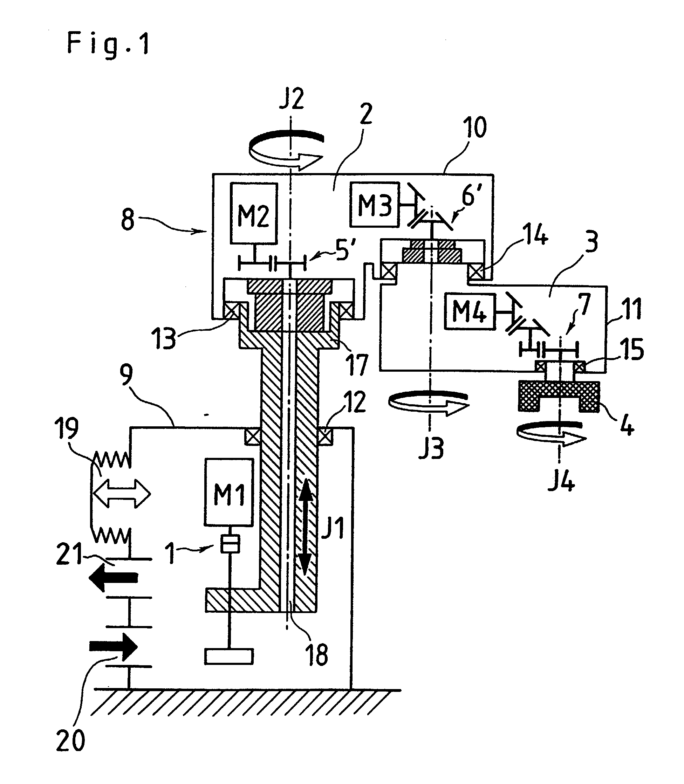

A first embodiment of the present invention will be described with reference to FIG. 1.

An industrial robot (hereinafter referred to simply as robot) has one linear axis J1 and three rotation axes J2, J3 and J4. The linear axis J1 is driven in the vertical direction by a servomotor M1 with the aid of a ball screw and nut mechanism 1 or the like, and serves to move a second axis arm 2 up and down. The rotation axis J2 causes a servomotor M2 to rotate the second axis arm 2 within a horizontal plane through the medium of a speed reducer 5'. The rotation axis J3 causes a servomotor M3 to rotate a third axis arm 3 within a horizontal plane through the medium of a speed reducer 6'. The rotation axis J4 causes a servomotor M4 to rotate a working tool 4 within a horizontal plane through the medium of a speed reducer 7.

An outer wall 8 that covers the robot is composed of a first casing 9 stored with the ball screw and nut mechanism 1, servomotor M1, etc., a second casing 10 stored with the servomotors M2 and M3, speed reducers 5' and 6', etc., and a third casing 11 stored with the servomotor M4, speed reducer 7, etc.

An oil seal 12 for maintaining dust- and waterproof functions is mounted between the first casing 9 and the linear axis J1. Further, oil seals 13, 14 and 15 for dust- and waterproof functions are mounted between the linear axis J1 and the second casing 10, between the second and third casings 10 and 11, and between the third casing 11 and the rotation axis J4, respectively.

As described above, the respective constructions of the robot shown in FIG. 1 and the outer wall 8 that covers the robot are substantially the same as those of the aforementioned ones shown in FIG. 3. However, they are different from the constructions of the robot and the outer wall 8 shown in FIG. 3 in the following points.
(1) provided outside the first casing 9 is an internal pressure fluctuation absorbing member that is formed of a bottomed bellows of soft rubber.
(2) The first casing 9 is provided with a gas inlet port 20 and an exhaust mechanism 21.
(3) An air passage 18 is formed in the linear axis J1 to coaxially penetrate the linear axis J1.
(4) An air passage is formed in the speed reducer 5' for transmitting the rotation of the servomotor M2 to the second axis arm 2, coaxial with the axis of the speed reducer 5'. Therefore, for distinguishing this speed reducer (hollow speed reducer) from the speed reducer 5 shown in FIG. 3, the speed reducer is denoted by numeral 5' in FIG. 1.
(5) An air passage is formed in the speed reducer 6' for transmitting the rotation of the servomotor M3 to the third axis arm 2, coaxial with the axis of the speed reducer 6'. Therefore, for distinguishing this speed reducer (hollow speed reducer) from the speed reducer 6 shown in FIG. 3, the speed reducer is denoted by numeral 6' in FIG. 1.

Based on the arrangement described in the above items (3), (4) and (5), air can freely move between the first casing 9, second casing 10, and third casing 11. Thus, the first, second, and third casings 9, 10 and 11 are joined together to define a single space inside the outer wall 8.

When the linear axis J1 of the robot of FIG. 1 descends, therefore, the substantial volume of the space inside the first casing 9 decreases, so that the pressure in the space inside the outer wall 8 rises. When the linear axis J1 ascends, in contrast with this, the substantial volume of the space inside the first casing 9 increases, so that the pressure inside the outer wall 8 lowers.

The following is a description of the internal pressure fluctuation absorbing member of the aforesaid feature (1) and the gas inlet port and exhaust mechanism of the aforesaid feature (2).

### [Internal Pressure Fluctuation Absorbing Member]

The internal pressure fluctuation absorbing member 19 is composed of a vessel-shaped object of which the capacity easily changes under the pressure of ambient gases, e.g., a bottomed bellows of soft rubber or the like. The variation of the capacity should be a value corresponding to the change in volume of the space inside the outer wall 8 that is caused as the linear axis J1 moves up and down.

As shown in FIG. 1, the internal pressure fluctuation absorbing member 19 is connected integrally to the outside of the first casing 9.

If there is enough space inside the first casing 9, however, the internal pressure fluctuation absorbing member 19 may be mounted so as to project into the first casing 9. According to this arrangement, the outer wall 8 of the robot need not be provided with any projection (internal pressure fluctuation absorbing member), so that the overall size of the robot can be reduced profitably.

Since the first casing 9 is internally connected to the second casing 10 and the third casing 11 by means of the air passage 18 that penetrates the linear axis J1 and the hollow speed reducers 5' and 6', the internal pressure fluctuation absorbing member 19 may alternatively be attached to (the outside or inside of) the second casing 10 or the third casing.

In an environment such that the internal pressure fluctuation absorbing member 19 cannot be attached to either the outside or the inside of the first casing 9 (or the second or third casing 10 or 11), the internal pressure fluctuation absorbing member 19 and the space inside the outer wall 8 may be connected by means of a tube with the internal pressure fluctuation absorbing member 19 placed at a distance from the robot. The tube used in this case may be, for example, a hollow cable of rubber or silicone or a metallic pipe.

Even in the case where the first casing 9 is provided independently of the second casing 10 without forming the air passage 18 in the linear axis J1, it is significant to attach the internal pressure fluctuation absorbing member 19 to the first casing 9. The reason is that the internal space of the casing 9 that covers the linear axis J1 changes substantially so that the fluctuation of the pressure in the casing 9 becomes particularly great as the linear axis J1 moves.

### [Gas Inlet Member and Exhaust Mechanism]

The gas inlet member 20 and the exhaust mechanism 21 are attached to the first casing 9. Since the first casing 9 is internally connected to the second and third casings 10 and 11, however, it can be also attached to the second or third casing 10 or 11.

The gas inlet member 20 is formed of a simple hollow coupling such as a nipple. A compressed gas from an air compressor (not shown) is guided into the first casing 9 through this hollow coupling. The compressed gas guided into the first casing 9 flows into the second and third casings 10 and 11 via the air passage 18 that penetrates the linear axis J1 and the air passages that penetrate the hollow speed reducers 5' and 6'.

The exhaust mechanism 21 opens to discharge air inside the outer wall 8, which is formed of the first, second, and third casings 9, 10 and 11 that internally connect with one another, to the outside of the outer wall 8 when the pressure inside the outer wall 8 exceeds a set value. This exhaust mechanism 21 is composed of a simple pressure control valve or the like, for example.

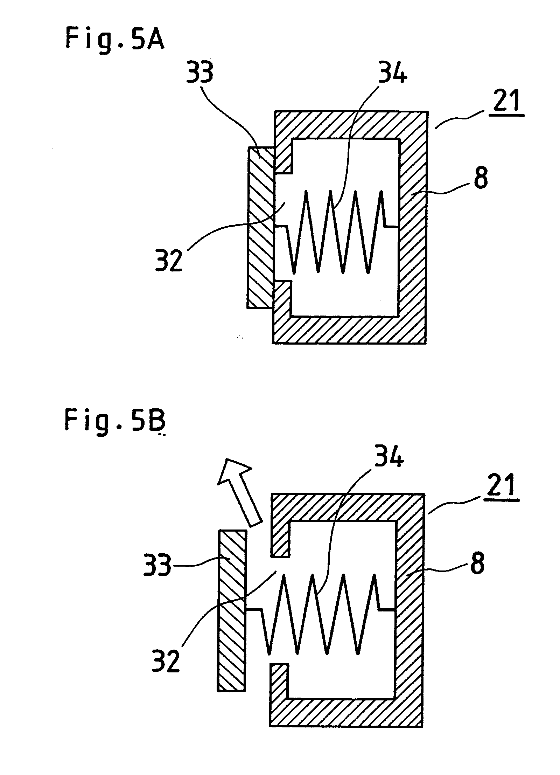

An outline of the structure of the exhaust mechanism 21 is explained with reference to FIGS. 5A and 5B. An aperture 32 is formed in a portion of the outer wall 8 and this aperture is closed by a valve 34 from outside. The valve 34 is biased by a spring 33 toward the outer wall 8. One end of the spring 33 is connected to the outer wall 8 while the other end is connected to the valve 34. Accordingly, as shown in FIG. 5A, gas within the outer wall 8 cannot open the valve 34 and flow out when pressure of the gas does not exceed the set pressure corresponding to the biasing force of the spring 33. On the other hand, if the pressure of the gas within the outer wall 8 exceeds the set pressure, gas open the valve 34 and flows out, as shown in FIG. 5B. When the pressure within the outer wall 8 is reduced again after gas flowing, then the aperture 32 of the outer wall 8 is closed by the biasing force of the spring 33.

The pressure inside the outer wall 8 for the actuation of the exhaust mechanism 21 is set in consideration of following requirements: the pressure inside the outer wall 8 should not be reduced to a level below the atmospheric pressure to allow the outside air to flow into the space inside the outer wall 8; the pressure inside the outer wall 8 should not be caused substantially to fluctuate by the introduction of the gas into the space inside the outer wall 8 by means of the gas inlet member and the exhaust of the gas from the space inside the outer wall 8 by means of the exhaust mechanism 21; and the pressure inside the outer wall 8 should not be increased to the level where the functions of the components (e.g., oil seals 12 to 15 and the like) covered with the outer wall 8 are ruined.

Even in the case where the first casing 9 is provided independently of the second casing 10 without forming the air passage 18 in the linear axis J1, it is significant to attach the gas inlet member 20 and the exhaust mechanism 21 to the first casing 9. The reason is that the internal space of the casing 9 that covers the linear axis J1 changes substantially so that the fluctuation of the pressure in the casing 9 becomes particularly great as the linear axis J1 moves.

The following is a description of modifications of the first embodiment shown in FIG. 1.

### [Modification 1]

The outer wall 8 is provided only with the internal pressure fluctuation absorbing member 19 and not with any gas inlet member or exhaust mechanism.

According to this modification, the internal pressure fluctuation absorbing member 19 can absorb a sudden change in volume of the space inside the outer wall 8 (or of the internal space of the casing 9 in the case where the internal space of the first casing 9 is not internally connected to the internal space of the second casing 10) that is produced as the linear axis J1 makes an instantaneous straight advance, so that the pressure in the space inside the outer wall 8 (or inside the first casing 9) can be restrained from changing suddenly.

Actually, the space inside the outer wall 8 is not perfectly sealed, but is allowed slightly to open into the outside air through the oil seals 12 to 15 and the like. Even if the linear axis J1 continues to stay at its lower or upper motion limit for a long time, therefore, the pressure in the space inside the outer wall 8 is equal to the atmospheric pressure.

If the linear axis J1 having so far been staying long at its lower motion limit suddenly rises, therefore, the pressure in the space inside the outer wall 8 is reduced to a level below the atmospheric pressure. If the linear axis J1 having so far been staying long at its upper motion limit suddenly lowers, in contrast with this, the pressure in the space inside the outer wall 8 increases to a level above the atmospheric pressure. Accordingly, the internal pressure fluctuation absorbing member 19 should be designed so that it can maintain its neutral capacity at the atmospheric pressure and increase or decrease its capacity as the linear axis J1 ascends or descends.

### [Modification 2]

The outer wall 8 is provided only with the gas inlet member 20 and the exhaust mechanism 21 and not with any internal pressure fluctuation absorbing member.

According to this modification, clean air is fed into the space inside the outer wall 8 through the gas inlet member 20, so that pressure in the space inside the outer wall 8 is always higher than the atmospheric pressure. Accordingly, the outside air can never flow into the space inside the outer wall 8 without passing through the gas inlet member 20. If the pressure in the space inside the outer wall 8 exceeds a set pressure higher than the atmospheric pressure, the exhaust mechanism 21 opens. Thus, the fluctuation of the pressure in the space inside the outer wall 8 can be restricted within a fixed range.

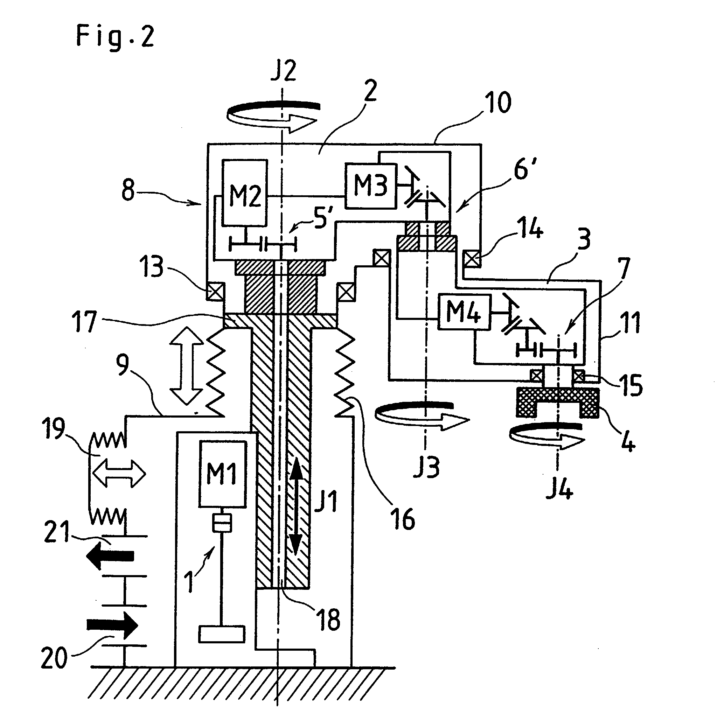

Referring now to FIG. 2, there will be described a second embodiment of the present invention.

A sealed structure of an outer wall according to this second embodiment is substantially the same as the structure of the first embodiment shown in FIG. 1. However, an oil seal 12, such as the one shown in FIG. 1, is not interposed between a first casing 9 and a linear axis J1. Instead, a cylindrical flexible bellows 16 is mounted between the top surface of the first casing 9 and the undersurface of a top flange portion 17 of the linear axis J1 so as to be coaxial with the linear axis J1.

When,the linear axis J1 of a robot of FIG. 2 descends, as in the case of the robot shown in FIG. 1, the substantial volume of the space inside the first casing 9 decreases, so that the pressure in the space inside the outer wall 8 rises. When the linear axis J1 ascends, in contrast with this, the substantial volume of the space inside the first casing 9 increases, so that the pressure inside the outer wall 8 lowers.

The first casing 9, like the one according to the first embodiment, is fitted with an internal pressure fluctuation absorbing member 19, gas inlet member 20, and exhaust mechanism 21, as shown in FIG. 2; More specifically, the internal pressure fluctuation absorbing member 19 is a member that can change its capacity in accordance with the fluctuation of the pressure inside the outer wall 8. The gas inlet member 20 serves to introduce a clean compressed gas into the internal space of the first casing 9. The exhaust mechanism 21 opens to discharge air inside the outer wall 8 to the outside of the outer wall 8 when the pressure in the space inside the outer wall 8 exceeds the set value.

Further, this second embodiment, like the first embodiment, includes a modification 1, in which the outer wall 8 is provided only with the internal pressure fluctuation absorbing member 19 and not with any gas inlet member or exhaust mechanism, and a modification 2, in which the outer wall 8 is provided only with the gas inlet member 20 and the exhaust mechanism 21 and not with any internal pressure fluctuation absorbing member.

Preferably, the internal pressure fluctuation absorbing member 19 shown in FIG. 2 should be formed of a material.that can be deformed more easily than the bellows 16. By doing this, the fluctuation in pressure that is caused as the linear axis J1 descends or ascends so that the pressure inside the outer wall 8 suddenly rises or drops can be absorbed by the deformation of the internal pressure fluctuation absorbing member 19. Thus, the pressure fluctuation does not act as a force to expand or contract the bellows 16.

## Claims

1. A sealed structure of an industrial robot, wherein the industrial robot has a sealed outer wall, and said outer wall is connected with vessel-shaped internal pressure fluctuation absorbing means having a variable capacity.

2. A sealed structure of an industrial robot according to claim 1, wherein said internal pressure fluctuation absorbing means is provided inside said outer wall.

3. A sealed structure of an industrial robot according to claim 1, wherein said internal pressure fluctuation absorbing means is located at a distance from the industrial robot and connected to said outer wall by means of a tubular connecting member.

4. A sealed structure of an industrial robot, wherein the industrial robot has a sealed outer wall, said outer wall is connected with a gas inlet port through which a compressed gas is fed into the space inside said outer wall and an exhaust mechanism adapted to evacuate or reduce the gas in the space inside said outer wall when the pressure inside said outer wall becomes higher than a set value.

5. A sealed structure of an industrial robot according to claim 1, 2 or 3, wherein said outer wall is connected with a gas inlet port through which a compressed gas is fed into the space inside said outer wall and an exhaust mechanism adapted to evacuate or reduce the gas in the space inside said outer wall when the pressure inside said outer wall becomes higher than a set value.

6. A sealed structure of an industrial robot, characterized in that a casing of the industrial robot, which substantially covers up a linear axis and a mechanism for driving said linear axis for straight movement, is fitted with a mechanism for adjusting the pressure in said casing in response to fluctuation of the pressure inside said casing caused by the movement of said linear axis.

7. A sealed structure of an industrial robot according to claim 6, wherein said mechanism for adjusting the pressure in said casing is a vessel-shaped member having a capacity variable in response to the pressure inside said casing produced by the movement of said linear axis, and fluctuation of the substantial volume of the space inside said casing caused by the movement of said linear axis is absorbed as the member changes the capacity thereof.

8. A sealed structure of an industrial robot, characterized in that an outer wall substantially sealing an industrial robot including a linear axis and a rotation axis is fitted with a mechanism for adjusting the pressure inside said outer wall in response to fluctuation of the pressure inside said outer wall caused by the movement of said linear axis.

9. A sealed structure of an industrial robot according to claim 8, wherein said outer wall includes a first casing covering the linear axis and a mechanism for driving the same and a second casing connected to the first linear axis by means of an oil seal, the second casing covering a rotation axis and a mechanism for driving the same, said linear axis is formed with a through hole extending in the axial direction thereof, said mechanism for adjusting the pressure inside said outer wall is a mechanism for externally introducing a gas into the space inside the outer wall, and a gas introduced into the first casing by said mechanism is introduced into said second casing through the through hole of said linear axis.

10. A sealed structure of an industrial robot according to claim 9, wherein said second casing is further connected with a third casing by means of an oil seal for rotation with respect to said second casing, the third casing covers up a rotation axis and a mechanism for driving the same, and said gas introduced into the second casing flows into the third casing through a passage formed in a speed reducer provided at the junction between the second and third casings.
